# FASCICULE DE BREVET EUROPEEN

(11) **EP 1 413 734 B1**
(45) Date de publication et mention de la délivrance du brevet: **30.11.2005**
(21) Numéro de dépôt: 03292159.5
(22) Date de dépôt: 03.09.2003
(51) Int. Cl.: F02K 1/76

(54) **Platine de maintenance et d'inhibition pour inverseur de poussée**
Wartungs- und Inhibitionsplatte für eine Schubumkehrvorrichtung
Maintenance and inhibition plate for a thrust reverser

(30) Priorité: 25.10.2002 FR 0213404
(43) Date de publication de la demande: 28.04.2004
(73) Titulaire: HISPANO SUIZA, 92700 Colombes (FR)
(72) Inventeur: Colotte, Baptiste, 77000 Melun (FR); Courpied, Alexandre, 75007 Paris (FR); Croixmarie, Marc, 91830 Auvernaux (FR); Le Gouellec, Gilles, 75018 Paris (FR); Michaud, Marion, 94320 Thiais (FR)
(74) Mandataire: Joly, Jean-Jacques

(56) Documents cités:
- EP-A- 0 506 277
- EP-A- 0 743 443
- EP-A- 0 801 221
- WO-A-01/57382
- US-A- 5 960 626
- US-A- 6 094 908

## Description

### Arrière-plan de l' invention

La présente invention se rapporte au domaine général des inverseurs de poussée pour turboréacteur à double flux. Elle vise plus particulièrement une platine de maintenance permettant d'inhiber électriquement et/ou mécaniquement un inverseur de poussée, notamment lors des opérations de maintenance de celui-ci.

Les inverseurs de poussée équipant les turboréacteurs à double flux sont bien connus dans le domaine de l'aéronautique. Ils servent à augmenter la sécurité d'un avion en fournissant une force de freinage lors de l'atterrissage de celui-ci. Les inverseurs de poussée se présentent généralement sous la forme d'une ou de plusieurs parties mobiles de la nacelle du turboréacteur, telles que des portes coulissantes, qui sont susceptibles de se déplacer sous l'action d'un vérin de commande de façon à dériver une partie des gaz issus du turboréacteur lors du fonctionnement en inversion de poussée. Lorsqu'elles sont en position ouverte, les portes de l'inverseur de poussée permettent de rediriger le flux d'air vers l'avant de façon à fournir une poussée inverse à l'avion.

Lorsqu'il est nécessaire, au cours d'opérations de maintenance, de vérifier si une pièce de inverseur de poussée est défectueuse, il est connu d'inhiber électriquement celui-ci afin d'éviter un déploiement intempestif. Dans ce cas, certains déplacements manuels des portes de l'inverseur de poussée peuvent être commandés par l'opérateur en charge de ces opérations au moyen d'une prise de mouvement des vérins permettant une commande manuelle des portes. Or, ces opérations ne sont pas sans risque pour l'opérateur. En effet, on a relevé de nombreux cas d'accidents survenant du fait que l'inverseur de poussée est toujours actif pendant ces opérations. Pour la sécurité de l'opérateur de maintenance, il est donc nécessaire d'éviter tout risque de déploiement intempestif des portes de inverseur. De même, il peut être nécessaire de bloquer mécaniquement l'inverseur de poussée, par exemple sur décision du pilote avant le décollage de l'avion. Cette inhibition ou blocage mécanique de l'inverseur de poussée est obtenue de manière fastidieuse en vissant généralement les portes de l'inverseur directement sur la nacelle du turboréacteur.

US 6,094,908 décrit un inverseur de poussée à portes pivotantes. Au moins deux vérins de commande des déplacements des portes sont associés à un dispositif de synchronisation.

### Objet et résumé de l'invention

La présente invention vise donc à pallier un tel inconvénient en proposant un inverseur de poussée pour turboréacteur équipé de moyens permettant de commander une inhibition électrique et/ou mécanique de inverseur de poussée, notamment lors des opérations de maintenance de celui-ci.

A cet effet, il est prévu un inverseur de poussée pour turboréacteur à double flux comportant au moins une partie mobile susceptible de se déplacer sous l'action d'au moins un vérin de commande de façon à constituer un obstacle de dérivation de flux lors d'un fonctionnement en inversion de poussée, au moins un boîtier de commande manuelle comportant une prise de mouvement permettant une commande manuelle de la partie mobile associée au vérin de commande, et un système de pilotage électrique assurant une commande électrique du vérin de commande, caractérisé en ce que :
à chaque boîtier de commande manuelle est associée une platine de maintenance pivotable entre au moins deux positions :
   une première position, dite de fonctionnement normal, dans laquelle la platine masque l'accès à la prise de mouvement du boîtier de commande manuelle afin d'interdire une commande manuelle de la partie mobile tout en autorisant une commande électrique de celle-ci, et
   une deuxième position, dite de maintenance, dans laquelle l'accès à la prise de mouvement du boîtier de commande manuelle est dégagé afin d'autoriser une commande manuelle de la partie mobile ;
   et en ce que l'inverseur comporte en outre des moyens de détection de la position des platines de maintenance reliés au système de pilotage électrique, les moyens de détection autorisant une inhibition de la commande électrique de l'inverseur lorsque l'une des platines de maintenance est en position de maintenance.

De la sorte, la présence des platines de maintenance permet d'éviter tout déploiement intempestif de l'inverseur de poussée lors des opérations de maintenance sur celui-ci. Lorsque l'une des platines de maintenance est déplacée en position de maintenance par l'opérateur, l'inverseur de poussée est automatiquement inhibé électriquement. Cette inhibition électrique a également pour avantage d'éviter à l'opérateur de maintenance tout risque d'électrocution.

Avantageusement, chaque platine de maintenance comporte un verrou destiné à coopérer avec la prise de mouvement du boîtier de commande manuelle à laquelle elle est associée afin de bloquer en position la partie mobiles lorsque la platine se trouve dans une troisième position, dite de blocage, différente des première et deuxième positions. Lorsque l'une des platines de maintenance est déplacée en position de blocage, l'inverseur est alors inhibé à la fois électriquement et mécaniquement. Les platines de maintenance assurent ainsi les deux fonctions d'inhibition (électrique et mécanique).

De préférence, les moyens de détection de la position des platines de maintenance reliés au système de pilotage électrique commandent une inhibition de la commande électrique de l'inverseur lorsque l'une des platines de maintenance est en position de blocage.

Le verrou des platines de maintenance peut être un carré ou un six-pans conformé de façon à venir se loger dans la prise de mouvement lorsque la platine se trouve dans la position de blocage.

Chaque platine de maintenance est avantageusement disposée dans un plan sensiblement perpendiculaire à un axe de la prise de mouvement du boîtier de commande manuelle auquel elle est associée et est pivotable autour d'un axe de rotation sensiblement parallèle à l'axe de la prise de mouvement. De plus, les platines de maintenance peuvent être des plaques sensiblement rectangulaires ou sensiblement en forme de L.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et en perspective d'une nacelle de turboréacteur comportant un inverseur de poussée à portes coulissantes, en position fermée ;
- la figure 2 est une vue partielle et en coupe longitudinale de inverseur de poussée de la figure 1 ;
- la figure 3 est une vue partielle et en coupe transversale de l'inverseur de poussée de la figure 1 ;
- les figures 4A à 4C représentent schématiquement une platine de maintenance équipant un inverseur de poussée selon un mode de réalisation de invention dans trois positions différentes ; et
- les figures 5A à 5C représentent schématiquement une platine de maintenance équipant un inverseur de poussée selon un autre mode de réalisation de l'invention également dans trois positions différentes.

### Description détaillée d'un mode de réalisation

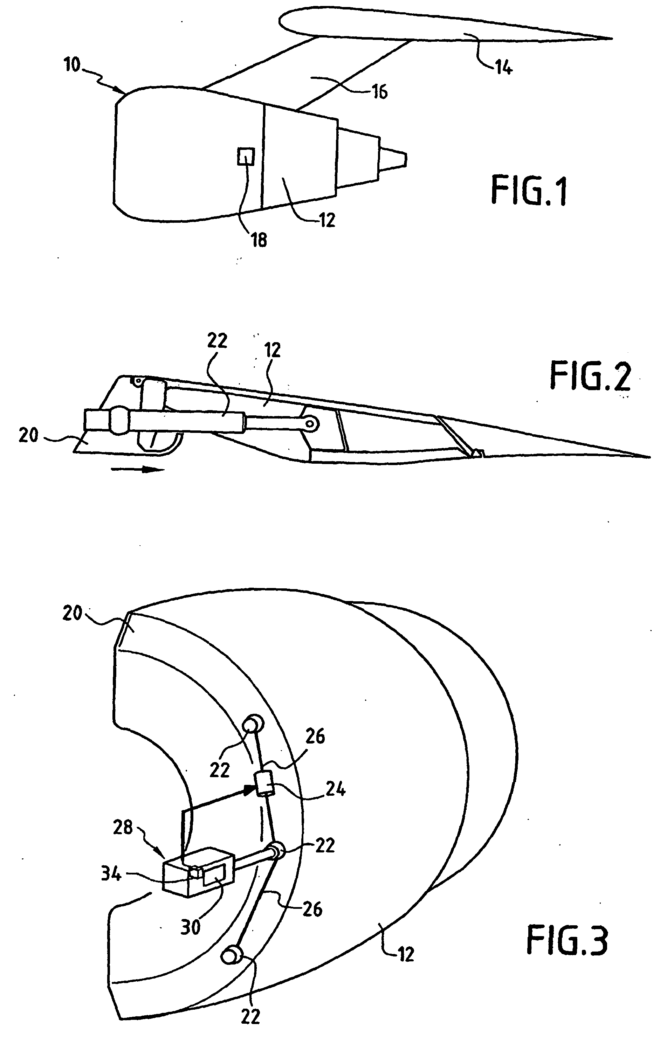

On se réfère d'abord aux figures 1 et 2 qui représentent schématiquement une nacelle 10 d'un turboréacteur à double flux comportant un inverseur de poussée à grilles. Cet inverseur de poussée est constitué, dans ce cas, d'une partie mobile 12 formant, en position inactive ou fermée, une partie du capotage extérieur de la nacelle 10. Le turboréacteur est fixé sous une aile 14 de l'avion par l'intermédiaire d'un pylône 16. La partie mobile de la nacelle 12 est montée coulissante sur une partie du capotage extérieur. Une trappe d'accès 18 sur le capotage extérieur de la nacelle peut être ajoutée afin de faciliter la maintenance de l'inverseur. La partie amont du capotage extérieur comporte un cadre avant 20 qui sert de support aux moyens de commande des déplacements de la partie mobile 12 de la nacelle, constitués par exemple par des vérins 22.

Comme représenté sur la figure 3, les vérins de commande 22 sont par ailleurs reliés à un système de pilotage électrique 24 de type connu en soi. Le système de pilotage peut, par exemple, être composé d'un moteur électrique et de son système électronique de puissance. Bien entendu, l'invention s'applique également à des inverseurs de poussée de type hydraulique ou pneumatique. Le système de pilotage peut être relié à un calculateur électronique pleine autorité communément dénommé FADEC (Full Authority Digital Engine Control). Sur l'exemple représenté sur la figure 3, un seul système de pilotage des vérins est utilisé pour commander le déplacement de la partie mobile 12 de la nacelle. Dans ce cas, des arbres de transmission flexibles 26 de type connu relient les vérins de commande 22 au système de pilotage.

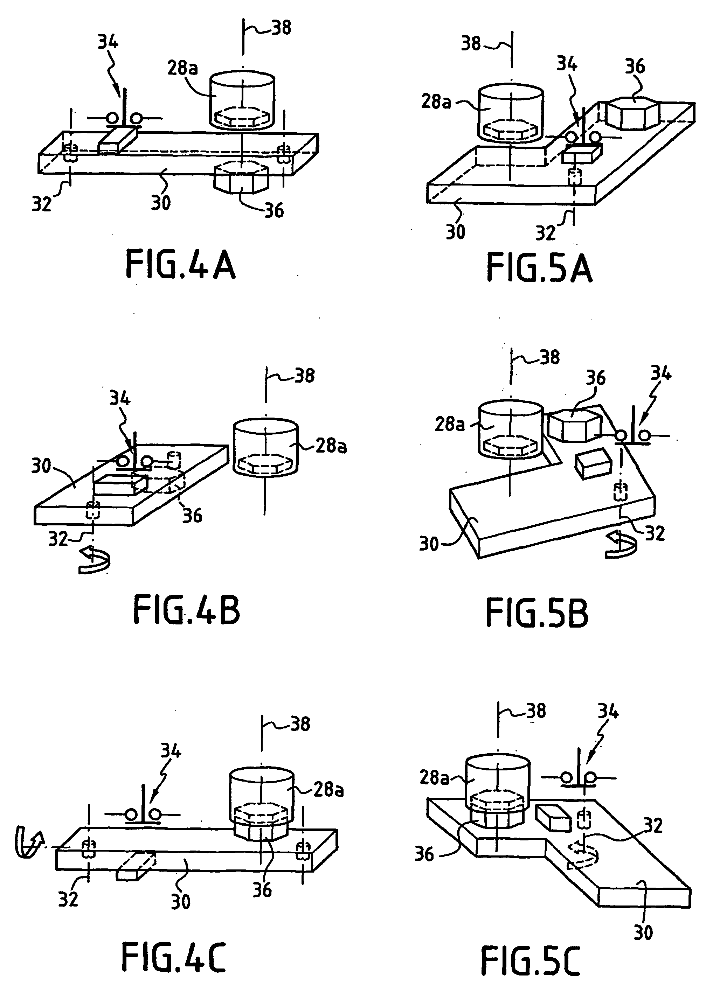

L'inverseur comporte en outre au moins un boîtier de commande manuelle 28 permettant à un opérateur de maintenance de faire coulisser manuellement la partie mobile 12 de la nacelle par l'intermédiaire d'une manivelle. Le boîtier de commande manuelle 28 (un seul est représenté figure 3) est fixé au niveau de l'un des vérins de commande 22 avec lequel il est en liaison mécanique permanente. Pour ce faire, chaque boîtier de commande manuelle comporte une prise de mouvement 28a (figures 4A à 4C et 5A à 5C) qui permet à l'opérateur de maintenance d'entraîner à la fois le vérin sur lequel il est fixé et les autres vérins de commande par l'intermédiaire des arbres de transmission 26. De la sorte, l'opérateur de maintenance peut actionner manuellement l'inverseur de poussée.

Selon l'invention, à chaque boîtier de commande manuelle 28 est associée une platine de maintenance 30. La disposition de la platine de maintenance dépend de la configuration du boîtier de commande manuelle qui peut comporter des renvois d'angle. Sur la figure 3, ces platines de maintenance sont disposées dans un plan sensiblement parallèle à un axe du vérin de commande auquel le boîtier de commande manuelle est associé et sont pivotables autour d'un axe de rotation 32 sensiblement perpendiculaire à l'axe du vérin. De plus, chaque platine de maintenance 30 est déplaçable par l'opérateur de maintenance entre au moins deux positions :
- une première position, dite de fonctionnement normal, dans laquelle la platine de maintenance 30 masque l'accès à la prise de mouvement 28a du boîtier de commande manuelle auquel elle est associée, interdisant ainsi une commande manuelle de la partie mobile 12 de la nacelle et donc de l'inverseur de poussée tout en autorisant une commande électrique de celui-ci ; et
- une deuxième position, dite de maintenance, obtenue par pivotement de la platine par rapport à l'axe de rotation 32, dans laquelle l'accès à la prise de mouvement 28a du boîtier de commande manuelle est dégagé, autorisant ainsi une commande manuelle de la partie mobile 12 de la nacelle et donc de l'inverseur de poussée tout en interdisant une commande électrique de celui-ci. Le pivotement manuel de la partie mobile de la nacelle est réalisé de façon classique en utilisant une manivelle dont un embout coopère avec la prise de mouvement du boîtier de commande manuelle.

En outre, l'inverseur de poussée selon l'invention comporte des moyens de détection 34 de la position de chacune des platines de maintenance 30. Ces moyens de détection 34 associés à chaque platine de maintenance sont reliés au système de pilotage électrique 24 et permettent de commander une inhibition de la commande électrique de inverseur lorsque l'une des platines de maintenance est déplacée en position de maintenance. Pour ce faire, ces moyens de détection peuvent être réalisés par exemple sous la forme d'un détecteur de proximité du type connu (par exemple optique, magnétique ou encore de type contacteur mécanique). Dans ce cas, lorsque l'une des platines de maintenance 30 est déplacée en position de maintenance, le détecteur de proximité associé à cette platine ne détecte plus la présence de la platine et autorise la coupure électrique de l'inverseur par l'intermédiaire du système de pilotage 24.

Avantageusement, chaque platine de maintenance 30 est pivotable dans une troisième position dite de blocage, différente des positions de fonctionnement normal et de maintenance, dans laquelle la platine interdit une commande manuelle de l'inverseur de poussée tout en interdisant également une commande électrique de celui-ci.

Pour ce faire, lorsque la platine de maintenance est en position de blocage, les moyens de détection 34 autorisent également une inhibition de la commande électrique de l'inverseur. Afin interdire la commande manuelle de la partie mobile 12 de la nacelle et donc de inverseur de poussée, la platine de maintenance présente un verrou (36 sur les figures 4C et 5C) destiné à coopérer avec la prise de mouvement 28a du boîtier de commande manuelle 28 lorsque la platine est en position de blocage de façon à bloquer en position la partie mobile 12 de la nacelle actionnée par les vérins de commande 12. Le verrou 36 peut être un carré ou un six-pans (selon la forme de prise de mouvement) conformé de façon à venir se loger dans la prise de mouvement 28a du boîtier de commande manuelle. Dans ce cas, le carré ou six-pans est positionné dans l'axe 38 de la prise de mouvement 28a du boîtier de commande manuelle lorsque la platine est pivotée dans sa position de blocage.

On se réfère maintenant aux figures 4A à 4C qui représentent un exemple de réalisation d'une platine de maintenance selon l'invention. Sur ces figures, la platine de maintenance 30 a une forme sensiblement rectangulaire.

La figure 4A illustre une platine de maintenance dans la position dite de fonctionnement normal. Dans cette position, une extrémité de la platine masque l'accès à la prise de mouvement 28a du boîtier de commande manuelle 28, interdisant ainsi une commande manuelle de inverseur de poussée. Les moyens de détection 34 informent le système de pilotage électrique 24 que la platine de maintenance est en position de fonctionnement normal. Le système de pilotage électrique peut alors autoriser une commande électrique de l'inverseur de poussée. La platine est maintenue dans cette position de fonctionnement normal, par exemple par l'intermédiaire de vis (non représentées).

Sur la figure 4B, la platine de maintenance a été pivotée manuellement par l'opérateur de maintenance (de 90° environ sur la figure) par rapport à sa position de fonctionnement normal. La platine se trouve ainsi en position de maintenance. Les moyens de détection 34 ne détectent plus la présence de la platine et autorisent alors une inhibition de la commande électrique de l'inverseur de poussée. L'opérateur de maintenance peut donc accéder directement à la prise de mouvement 28a du boîtier de commande manuelle 28 sans qu'il existe de risques de déploiement intempestif de l'inverseur et d'électrocution.

Enfin, comme représenté sur la figure 4C, la platine de maintenance peut être pivotable en position de blocage de inverseur de poussée. Pour ce faire, l'opérateur de maintenance retourne la platine 30 par rapport à sa position de fonctionnement normal de sorte que son verrou 36, qui est positionné dans l'axe 38 de la prise de mouvement 28a, vient se loger dans la prise de mouvement du boîtier de commande manuelle, bloquant ainsi mécaniquement celui-ci. En outre, les moyens de détection 34 ne détectent plus la présence de la platine 30 et autorisent alors une inhibition de la commande électrique de l'inverseur de poussée. L'inverseur ne peut donc plus être commandé ni mécaniquement ni électriquement. Cette inhibition totale de l'inverseur de poussée peut, par exemple, être décidée par le pilote avant le décollage de l'avion. Elle peut être également utilisée lors de la maintenance de l'inverseur : l'opérateur effectue d'abord une inhibition de la commande électrique de l'inverseur en plaçant les platines de maintenance dans la position de maintenance afin de pouvoir positionner l'inverseur dans la position qu'il souhaite, puis il réalise une inhibition de la commande mécanique de inverseur avant d'effectuer les opérations de maintenance proprement dites. Cette solution a pour avantage d'offrir une plus grande sécurité à l'opérateur de maintenance.

Les figures 5A à 5C représentent un autre exemple de réalisation d'une platine de maintenance selon l'invention. Sur ces figures, la platine de maintenance 30 présente une forme de L.

Sur la figure 5A, la platine de maintenance est dans la position dite de fonctionnement normal. Une extrémité de la platine masque l'accès à la prise de mouvement 28a du boîtier de commande manuelle, interdisant ainsi une commande manuelle de l'inverseur de poussée tout en autorisant sa commande électrique. Sur la figure 5B, la platine de maintenance a été pivotée manuellement par l'opérateur de maintenance (de 45° environ sur la figure) par rapport à sa position de fonctionnement normal. La platine se trouve ainsi en position de maintenance et l'accès à la prise de mouvement 28a du boîtier de commande manuelle est dégagée. Les moyens de détection 34 ne détectent plus la présence de la platine et autorisent alors une inhibition de la commande électrique de l'inverseur de poussée. Sur la figure 5C, la platine de maintenance 30 est à nouveau pivotée par l'opérateur de 45° environ par rapport à sa position de maintenance. Le verrou 36, qui est positionné dans l'axe 38 de la prise de mouvement 28a, vient se loger dans la prise de mouvement du boîtier de commande manuelle, bloquant ainsi mécaniquement celui-ci. Les moyens de détection 34 ne détectent toujours pas la présence de la platine 30 et autorisent également une inhibition de la commande électrique de l'inverseur de poussée.

Les exemples montrés sont appliqués à un inverseur de poussée à grilles. Les platines de maintenance peuvent néanmoins être utilisées sur un inverseur à obstacles aval (à portes ou à coquilles par exemple), en association avec les vérins de commande des déplacements des parties mobiles de l'inverseur.

## Revendications

1. Inverseur de poussée pour turboréacteur à double flux comportant :
au moins une partie mobile (12) susceptible de se déplacer sous l'action d'au moins un vérin de commande (22) de façon à constituer un obstacle de dérivation de flux lors d'un fonctionnement en inversion de poussée,
au moins un boîtier de commande manuelle (28) comportant une prise de mouvement (28a) permettant une commande manuelle de ladite partie mobile (12) associée audit vérin de commande, et
un système de pilotage électrique (24) assurant une commande électrique dudit vérin de commande,
**caractérisé en ce que** :
à chaque boîtier de commande manuelle (28) est associée une platine de maintenance (30) pivotable entre au moins deux positions :
une première position, dite de fonctionnement normal, dans laquelle ladite platine masque l'accès à la prise de mouvement (28a) du boîtier de commande manuelle (28), et
une deuxième position, dite de maintenance, dans laquelle l'accès à la prise de mouvement (28a) du boîtier de commande manuelle (28) est dégagé ;
et **en ce que** l'inverseur comporte en outre des moyens de détection (34) de la position desdites platines de maintenance reliés audit système de pilotage électrique (24), lesdits moyens de détection autorisant une inhibition de la commande électrique dudit inverseur lorsque l'une des platines de maintenance est en position de maintenance.

2. Inverseur de poussée selon la revendication 1, **caractérisé en ce que** chaque platine de maintenance (30) comporte un verrou (36) destiné à coopérer avec la prise de mouvement (28a) du boîtier de commande manuelle (28) à laquelle elle est associée afin de bloquer en position la partie mobile (12) lorsque ladite platine se trouve dans une troisième position, dite de blocage, différente desdites première et deuxième positions.

3. Inverseur de poussée selon la revendication 2, **caractérisé en ce que** les moyens de détection (34) de la position desdites platines de maintenance autorisent une inhibition de la commande électrique dudit inverseur lorsque l'une des platines de maintenance est en position de blocage.

4. Inverseur selon l'une des revendications 2 et 3, **caractérisé en ce que** ledit verrou (36) est un carré ou un six-pans conformé de façon à venir se loger dans ladite prise de mouvement lorsque ladite platine se trouve dans ladite position de blocage.

5. Inverseur de poussée selon l'une quelconque des revendications 1 à 4, **caractérisé en ce que** chaque platine de maintenance (30) est disposée dans un plan sensiblement perpendiculaire à un axe (38) de la prise de mouvement (28a) du boîtier de commande manuelle (28) auquel elle est associée et est pivotable autour d'un axe de rotation (32) sensiblement parallèle audit axe de la prise de mouvement.

6. Inverseur de poussée selon la revendication 5, **caractérisé en ce que** ladite platine de maintenance (30) est une plaque sensiblement rectangulaire.

7. Inverseur de poussée selon la revendication 5, **caractérisé en ce que** ladite platine de maintenance (30) est une plaque sensiblement en forme de L.

## Patentansprüche

1. Schubumkehrer für einen Doppelstrom-Turbinenreaktor, umfassend:
- wenigstens ein bewegliches Teil (12), das geeignet ist, sich unter der Wirkung von wenigstens einem Stellantrieb (22) derart zu bewegen, daß ein Hindernis zur Strömungsablenkung bei einem Schubumkehrbetrieb gebildet wird,
- wenigstens ein Gehäuse (28) zur manuellen Steuerung, das einen Griff (28a) zum Bewegen umfaßt, welcher eine manuelle Steuerung des beweglichen Teils (12) erlaubt, daß dem Stellantrieb zugeordnet ist, und
- ein elektrisches Steuersystem (24), das eine elektrische Steuerung des Stellantriebs sicherstellt,
**dadurch gekennzeichnet,**
- **daß** jedem Gehäuse (28) zur manuellen Steuerung eine Wartungsplatte (30) zugeordnet ist, die zwischen wenigstens zwei Positionen schwenkbar ist:
- einer ersten Position, genannt Normalbetriebsposition, in welcher die Platte den Zugang zum Griff (28a) zum Bewegen des Gehäuses (28) zur manuellen Steuerung überdeckt, und
- einer zweiten Position, genannt Wartungsposition, in welcher der Zugang zum Griff (28a) zum Bewegen des Gehäuses (28) zur manuellen Steuerung freigegeben ist, und
- **daß** der Umkehrer außerdem Mittel (34) zum Detektieren der Position der Wartungsplatte (30) umfaßt, die mit dem elektrischen Steuersystem (24) verbunden sind, wobei die Mittel zur Detektion eine Unterbrechung der elektrischen Steuerung des Umkehrers zulassen, wenn eine der Wartungsplatten in der Wartungsposition steht.

2. Schubumkehrer nach Anspruch 1, **dadurch gekennzeichnet, daß** jede Wartungsplatte (30) einen Riegel (36) umfaßt, der dazu vorgesehen ist, mit dem Griff (28a) zum Bewegen des Gehäuses (28) zur manuellen Steuerung, dem er zugeordnet ist, zusammenzuwirken, um das bewegliche Teil (12) in seiner Position zu blockieren, wenn die Platte sich in einer dritten Position, genannt Blockierposition, befindet, die verschieden von der ersten und der zweiten Position ist.

3. Schubumkehrer nach Anspruch 2, **dadurch gekennzeichnet, daß** die Mittel zur Detektion (34) der Position der Wartungsplatten eine Unterbrechung der elektrischen Steuerung des Umkehrers zulassen, wenn eine der Wartungsplatten in der Blockierposition ist.

4. Umkehrer nach einem der Ansprüche 2 und 3, **gekennzeichnet dadurch, daß** der Riegel (36) ein Vierkant oder ein Sechskant ist, der derart ausgeformt ist, daß er sich in den Griff zum Bewegen setzen wird, wenn die Platte sich in der Blockierposition befindet.

5. Schubumkehrer nach einem der Ansprüche 1 bis 4, **dadurch gekennzeichnet, daß** die Wartungsplatte (30) in einer Ebene angeordnet ist, die im wesentlichen senkrecht zu einer Achse (38) des Griffs (28a) zum Bewegen des Gehäuses (28) zur manuellen Steuerung (28) angeordnet ist, dem er zugeordnet ist, und um eine Rotationsachse (32) drehbar ist, die im wesentlichen parallel zur Achse des Griffs zum Bewegen ist.

6. Schubumkehrer nach Anspruch 5, **dadurch gekennzeichnet, daß** die Wartungsplatte (30) eine im wesentlichen rechteckige Platte ist.

7. Schubumkehrer nach Anspruch 5, **dadurch gekennzeichnet, daß** die Wartungsplatte (30) eine Platte ist, die im wesentlichen L-förmig ist.

## Claims

1. A thrust reverser for a bypass turbojet, the thrust reverser including:
at least one moving part (12) suitable for being displaced under drive from at least one control actuator (22) so as to constitute an obstacle for diverting flow when operating to reverse thrust;
at least one manual control unit (28) including a drive takeoff (28a) enabling said moving part (12) associated with said control actuator to be driven manually; and
an electrical control system (24) for driving said control actuator electrically;
the reverser being **characterised in that**:
each manual control unit (28) is associated with a maintenance plate (30) that is pivotable between at least two positions:
a first or "normal operation" position in which said plate masks access to the drive takeoff (28a) of the manual control unit (28); and
a second or "maintenance" position in which access to the drive takeoff (28a) of the manual control unit (28) is released;
and **in that** the reverser further includes detector means (34) for detecting the positions of said maintenance plates connected to said electrical control system (24), said detector means allowing electrical drive of said reverser to be inhibited whenever one of the maintenance plates is in the maintenance position.

2. A thrust reverser according to claim 1, **characterised in that** each maintenance plate (30) includes a latch (36) for co-operating with the drive takeoff (28a) of the manual control unit (28) with which it is associated so as to lock the moving part (12) in position when said plate is into a third or "locking" position different from said first and second positions.

3. A thrust reverser according to claim 2, **characterised in that** the detector means (34) for detecting the positions of said maintenance plates allow electrical control of said reverser to be inhibited whenever any one of the maintenance plates is in the locking position.

4. A reverser according to claim 2 or claim 3, **characterised in that** said latch (36) is square or hexagonal and shaped to be received in said drive takeoff when said plate is in said locking position.

5. A thrust reverser according to any one of claims 1 to 4, **characterised in that** each maintenance plate (30) is disposed in a plane substantially perpendicular to an axis (38) of the drive takeoff (28a) of the manual control unit (28) with which it is associated, and is pivotable about a pivot axis (32) substantially parallel to said axis of the drive takeoff.

6. A thrust reverser according to claim 5, **characterised in that** said maintenance plate (30) is substantially rectangular.

7. A thrust reverser according to claim 5, **characterised in that** said maintenance plate (30) is substantially L-shaped.
